# EUROPEAN PATENT APPLICATION

(11) **EP 4 832 093 A1**
(43) Date of publication of application: **28.10.2026**
(21) Application number: 25211058.0
(22) Date of filing: 24.10.2025
(51) Int. Cl.: H01M 4/36, H01M 4/38, H01M 10/0525

(54) **NEGATIVE ELECTRODE FOR RECHARGEABLE LITHIUM BATTERY AND RECHARGEABLE LITHIUM BATTERY INCLUDING THE SAME**

(30) Priority: 22.04.2025 KR 20250052014
(71) Applicant: SAMSUNG SDI CO., LTD., Yongin-si, Gyeonggi-do 17084 (KR)
(72) Inventor: JUNG, Sungwon, 17084 Yongin-si (KR); LEE, Jungho, 17084 Yongin-si (KR); OH, Doori, 17084 Yongin-si (KR); KIM, Yunsik, 17084 Yongin-si (KR); SEONG, Ilwon, 17084 Yongin-si (KR); BYUN, Sangwon, 17084 Yongin-si (KR); NAH, Jaehou, 17084 Yongin-si (KR)
(74) Representative: Marks & Clerk LLP

(57) **Abstract**

A negative electrode for a rechargeable lithium battery includes a current collector and a negative electrode active material layer on the current collector. The negative electrode active material layer includes a first silicon composite and a second silicon composite. The first silicon composite includes amorphous silicon and a first carbon material. The second silicon composite includes crystalline silicon and a second carbon material. The negative electrode has a DQ/DV value obtained by differentiating a discharge capacity Q of the negative electrode with respect to a voltage V. The DQ/DV values include a first peak value being a maximum value in a voltage range of about 0.23 V to about 0.25 V, and a second peak value being a maximum value in the voltage range of about 0.4 V to about 0.5 V. A ratio of the second peak value to the first peak value is about 3.5 to about 5.5.

## Description

### BACKGROUND

### 1. Field

The present disclosure relates to a negative electrode for a rechargeable lithium battery and a rechargeable lithium battery including the same.

### 2. Description of the Related Art

With the rapid proliferation of battery-powered electronic devices (such as mobile phones, notebook computers) and/or electric vehicles, the demand for rechargeable batteries with high energy density and large capacity has significantly increased. In response, extensive research and development efforts have been directed toward enhancing the performance of rechargeable batteries, including rechargeable lithium batteries.

A rechargeable lithium battery generally includes a positive electrode, a negative electrode, and an electrolyte. Each of the positive electrode and the negative electrode contains an active material that is capable of lithium-ion intercalation and deintercalation. Electrical energy is generated through oxidation and reduction reactions as lithium ions move between the electrodes during charging and discharging. For example, during discharge, electrical energy is generated as lithium ions are intercalated into the positive electrode and/or deintercalated from the negative electrode.

### SUMMARY

One or more aspects of embodiments of the present disclosure are directed toward a negative electrode that exhibits high density, conductivity, and low resistance.

One or more aspects of embodiments of the present disclosure are directed toward a rechargeable lithium battery that exhibits a high energy density, excellent or suitable efficiency, and a long cycle life.

Additional aspects will be set forth in part in the description which follows and, in part, will be apparent from the description, or may be learned by practice of the presented embodiments of the disclosure.

According to one or more embodiments of the present disclosure, a negative electrode for a rechargeable lithium battery may include: a negative electrode current collector and a negative electrode active material layer on the negative electrode current collector. The negative electrode active material layer may include a first silicon composite (e.g., in a form of particles) and a second silicon composite (e.g., in a form of particles). The first silicon composite may include amorphous silicon and a first carbon material. The second silicon composite may include crystalline silicon and a second carbon material. The negative electrode may have a DQ/DV value obtained by differentiating a discharge capacity Q of the negative electrode with respect to a voltage V, and the DQ/DV values may include: a first peak value that is a maximum value in a voltage range of about 0.23 V to about 0.25 V; and a second peak value that is a maximum value in the voltage range of about 0.4 V to about 0.5 V, and a ratio of the second peak value to the first peak value is about 3.5 to about 5.5.

According to one or more embodiments of the present disclosure, a negative electrode may include: a negative electrode current collector and a negative electrode active material layer on the negative electrode current collector. The negative electrode active material layers may include graphite, a first silicon composite (e.g., in a form of particles), and a second silicon composite (e.g., in a form of particles). The first silicon composite may include amorphous silicon and a first carbon material, and the second silicon composite may include crystalline silicon and a second carbon material. A ratio of an amount of the second silicon composite to an amount of the first silicon composite may be about 2 to about 5.

According to one or more embodiments of the present disclosure, a rechargeable lithium battery may include the negative electrode described above; a positive electrode; and a separator between (e.g., arranged between or disposed between) the negative electrode and the positive electrode.

At least some of the above and other features of the invention are set out in the claims.

These and other embodiments described herein, for example, aim to address the limitations of related art negative electrode materials by combining the structural stability of amorphous silicon with the high capacity of crystalline silicon, while enhancing the electrode's electrochemical profile through tailored composite ratios and voltage characteristics. As a result, the disclosed negative electrode structures contribute to the development of enhanced lithium batteries with improved performance, reliability, and commercial viability.

### BRIEF DESCRIPTION OF DRAWINGS

The accompanying drawings are included to provide a further understanding of the disclosure and are incorporated in and constitute a part of this disclosure. The drawings illustrate example embodiments of the disclosure and, together with the description, serve to explain principles of the disclosure. The above and other aspects, features, and advantages of certain embodiments of the present disclosure will be more apparent from the following description taken in conjunction with the accompanying drawings.
FIG. 1 is a schematic view of a rechargeable lithium battery according to one or more embodiments of the present disclosure.
FIGS. 2 - 5 are each a schematic view illustrating a rechargeable lithium battery according to one or more embodiments of the present disclosure.
FIG. 6 is a cross-sectional view of a rechargeable lithium battery according to one or more embodiments of the present disclosure.
FIG. 7 is an enlarged view according to the M region of FIG. 6 according to one or more embodiments of the present disclosure.
FIG. 8A is a schematic view showing the first silicon composite of the present disclosure.
FIG. 8B is a schematic view showing the second silicon composite of the present disclosure.
FIG. 9A, FIG. 9B, FIG. 9C, FIG. 10A, FIG. 10B, FIG. 11A, and FIG. 11B are graphs for describing a negative electrode according to an example and comparative examples of the present disclosure.
FIGS. 12A and 12B are scanning electron microscopy (SEM) images of the first silicon composite and the second silicon composite, respectively, according to one or more embodiments of the present disclosure.
FIG. 13 is a graph analyzing the XRD diffraction pattern of an example of the present disclosure.

### DETAILED DESCRIPTION

To fully understand the configuration and effects of the present disclosure, one or more embodiments will be described with reference to the accompanying drawings. However, the present disclosure is not limited to the following example embodiments and may be implemented in one or more suitable forms. The example embodiments are provided solely to illustrate the present disclosure and to enable those skilled in the art to fully understand its scope.

In this disclosure, if (e.g., when) an element is described as being "on" another element, it may be directly on the other element, or one or more intervening elements may be present therebetween. In contrast, if (e.g., when) an element is referred to as being "directly on" another element, there are no intervening elements present therebetween. In the drawings, certain thicknesses may be exaggerated to better illustrate technical details. Throughout the disclosure, like reference numerals indicate like elements, and duplicative descriptions thereof may not be provided for conciseness.

One or more embodiments described herein may be illustrated using sectional and/or plan views, which are presented as idealized and illustrative examples of the present disclosure. The thicknesses of layers and regions in the drawings may be exaggerated for clarity. The regions shown in the drawings are for illustrative purposes and should not be construed as limiting the scope of the present disclosure. Although terms such as "first," "second," "third," and/or the like may be used to describe one or more suitable elements, these terms are merely used for distinction and do not imply any particular order or hierarchy. For example, a first element discussed herein could be termed a second element, without departing from the scope of the disclosure. The embodiments described and illustrated herein may include complementary variations.

The terms used in this disclosure serve only to explain one or more suitable embodiments and are not intended to limit the present disclosure. Unless explicitly stated otherwise, singular forms may also include plural forms. For example, the singular forms "a," "an," and "the" are intended to include the plural forms as well, unless the context clearly indicates otherwise. The terms " comprise(s)/comprising" and/or "include(s)/including" and/or "has(have)/having" do not exclude the presence or addition of one or more other components. Additionally, the terms "comprise(s)/comprising," "include(s)/including," "has(have)/having", or other similar terms include or support the terms "consisting of" and "consisting essentially of," indicating the presence of stated features, numbers, steps, operations, elements, parts, and/or components, without or essentially without the presence of other features, numbers, steps, operations, elements, parts, components, and/or groups thereof. Further, the utilization of "may" when describing embodiments of the present disclosure refers to "one or more embodiments of the present disclosure".

In this disclosure, the phrase "combination thereof" may refer to a mixture, a stack, a composite, a copolymer, an alloy, a blend, or a reaction product of constituents.

Unless otherwise specifically defined, the term "particle diameter" or "particle size" refers to an average particle diameter/size. The particle diameter/size may represent the median particle size (D50), which corresponds to the diameter/size of particles at 50 vol% in a cumulative particle size distribution. In other words, D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. The average particle diameter/size (D50) may be measured using widely suitable methods, such as a particle size analyzer, for example, HORIBA, LA-950 laser particle size analyzer, or by using transmission electron microscope (TEM) imaging, or scanning electron microscope (SEM) imaging. In one or more embodiments, dynamic light scattering may be used, where particle counts within size ranges are analyzed to calculate the average particle diameter/size (D50). In one or more embodiments, a laser scattering method may be employed, in which target particles are dispersed in a solvent, introduced into a laser scattering particle measurement device (e.g., MT3000 from Microtrac, Inc.), irradiated with ultrasonic waves at 28 kHz and 60 W, and subsequently analyzed to determine the D50 value based on a 50% cumulative particle size distribution. In the present disclosure, when particles are spherical, "diameter/size" indicates an average particle diameter/size, and when the particles are non-spherical, the "diameter/size" indicates an average major axis length of particles.

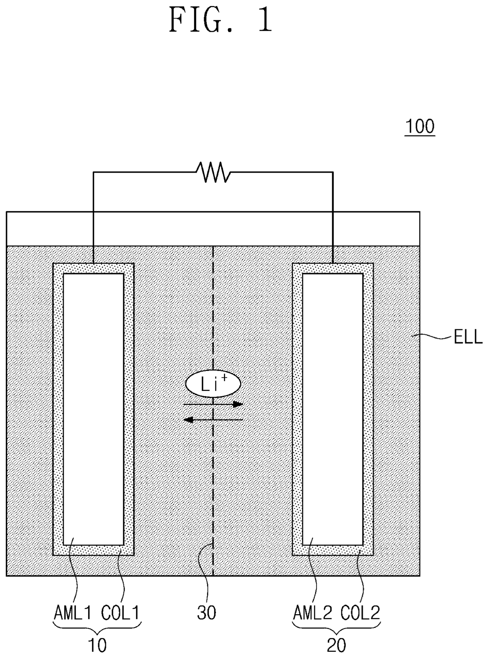

FIG. 1 is a cross-sectional view of a rechargeable lithium battery according to one or more embodiments of the present disclosure. Referring to FIG. 1, a rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be arranged between the positive electrode 10 and the negative electrode 20. The positive electrode 10, the negative electrode 20, and the separator 30 may be in contact with the electrolyte solution ELL. For example, the positive electrode 10, the negative electrode 20, and the separator 30 may be impregnated in the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

### Positive Electrode 10

The positive electrode 10 for a rechargeable lithium battery may include a current collector COL1 and a positive electrode active material layer AML1 on the current collector COL1. The positive electrode active material layer AML1 may include a positive electrode active material (e.g., in a form of particles) and may further include a binder and/or a conductive material (e.g., an electrically conductive material).

In one or more embodiments, the positive electrode 10 may further include an additive that can serve as a sacrificial positive electrode.

An amount of the positive electrode active material may be about 90 wt% to about 99.5 wt% based on a total weight of 100 wt% of the positive electrode active material layer AML1. Amounts of the binder and the conductive material may each be about 0.5 wt% to about 5 wt%, based on the total weight of 100 wt% of the positive electrode active material layer AML1.

The binder serves to attach the positive electrode active material particles well to each other and also to attach the positive electrode active material well to the current collector COL1. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and/or the like, as non-limiting examples.

The conductive material (e.g., electrically conductive material) may be used to impart conductivity (e.g., electrical conductivity) to the electrode. Any material that does not cause chemical change (e.g., does not cause an undesirable chemical change in the rechargeable lithium battery) and conducts electrons may be used in the battery. Non-limiting examples of the conductive material may include a carbon-based material such as natural graphite, artificial graphite, carbon black, acetylene black, Ketjen black, a carbon fiber, a carbon nanofiber, and carbon nanotube; a metal-based material containing copper, nickel, aluminium, silver, and/or the like, in a form of a metal powder or a metal fiber; a conductive polymer such as a polyphenylene derivative; or a mixture thereof.

In one or more embodiments, aluminium (Al) may be used as the current collector COL1, but embodiments of the present disclosure are not limited thereto.

### Positive Electrode Active Material

The positive electrode active material may include a compound (lithiated intercalation compound) that is capable of intercalating and deintercalating lithium. For example, in one or more embodiments, at least one of a composite oxide of lithium and a metal selected from among cobalt, manganese, nickel, and combinations thereof may be used.

The composite oxide may be a lithium transition metal composite oxide. Non-limiting examples of the composite oxide may include lithium nickel-based oxides, lithium cobalt-based oxides, lithium manganese-based oxides, lithium iron phosphate-based compounds, cobalt-free nickel-manganese-based oxides, and/or a combination thereof.

In one or more embodiments, one or more compounds represented by any one selected from among the following Chemical Formulas may be used: LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); and LiₐFePO₄ (0.90≤a≤1.8).

In the foregoing Chemical Formulas, A may be nickel (Ni), cobalt (Co), manganese (Mn), or a combination thereof; X may be Al, Ni, Co, Mn, chromium (Cr), iron (Fe), magnesium (Mg), strontium (Sr), vanadium (V), a rare earth element, or a combination thereof; D may be oxygen (O), fluorine (F), sulfur (S), phosphorous (P), or a combination thereof; G may be Al, Cr, Mn, Fe, Mg, lanthanum (La), cerium (Ce), Sr, V, or a combination thereof; and L¹ may be Mn, Al, or a combination thereof.

In one or more embodiments, the positive electrode active material may be, for example, a high nickel-based positive electrode active material having a nickel content (e.g., amount) of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of a total metal excluding lithium in the lithium transition metal composite oxide. The high-nickel-based positive electrode active material may be capable of realizing high capacity and may be applied to a high-capacity, high-density rechargeable lithium battery.

### Negative Electrode 20

The negative electrode 20 for a rechargeable lithium battery may include a current collector COL2 and a negative electrode active material layer AML2 on the current collector COL2. The negative electrode active material layer AML2 may include a negative electrode active material (e.g., in a form of particles), and may further include a binder and/or a conductive material (e.g., an electrically conductive material).

For example, in one or more embodiments, the negative electrode active material layer AML2 may include about 90 wt% to about 99 wt% of the negative electrode active material, about 0.5 wt% to about 5 wt% of the binder, and about 0 wt% to about 5 wt% of the conductive material, based on a total weight of 100 wt% of the negative electrode active material layer.

The binder may serve to attach the negative electrode active material particles well to each other and also to attach the negative electrode active material well to the current collector COL2. The binder may include a non-aqueous (e.g., water-insoluble) binder, an aqueous (water-soluble) binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from among a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the binder of the negative electrode, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material (e.g., electrically conductive material) may be used to impart conductivity (e.g., electrical conductivity) to the electrode. Any material that does not cause chemical change (e.g., does not cause an undesirable chemical change in the rechargeable lithium battery) and that conducts electrons may be used in the battery. Non-limiting examples thereof may include a carbon-based material such as natural graphite, artificial graphite, carbon black, acetylene black, Ketjen black, a carbon fiber, a carbon nanofiber, and a carbon nanotube; a metal-based material including copper, nickel, aluminium, silver, and/or the like in a form of a metal powder or a metal fiber; a conductive polymer such as a polyphenylene derivative; and/or a mixture thereof.

The negative current collector COL2 may include a copper foil, a nickel foil, a stainless steel foil, a titanium foil, a nickel foam, a copper foam, a polymer substrate coated with a conductive metal, or a combination thereof.

### Negative Electrode Active Material

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include a carbon-based negative electrode active material, such as, for example, crystalline carbon, amorphous carbon, or a combination thereof. The crystalline carbon may be graphite such as non-shaped (e.g., irregularly shaped), sheet-shaped, flake-shaped, sphere-shaped, or fiber-shaped natural graphite or artificial graphite. The amorphous carbon may be a soft carbon, a hard carbon, a mesophase pitch carbonization product, calcined coke, and/or the like.

The lithium metal alloy includes an alloy of lithium and a metal selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminium (Al), and tin (Sn) (e.g., sodium (Na), potassium (K), rubidium (Rb), cesium (Cs), beryllium (Be), magnesium (Mg), calcium (Ca), strontium (Sr), silicon (Si), antimony (Sb), lead (Pb), indium (In), zinc (Zn), barium (Ba), germanium (Ge), aluminium (Al), and tin (Sn)).

The material capable of doping/dedoping lithium may be a Si-based negative electrode active material or a Sn-based negative electrode active material. The Si-based negative electrode active material may include silicon, a silicon-carbon composite, SiOₓ (0 < x ≤ 2), a Si-Q alloy (where Q is selected from among an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, SnOₖ (0<k≤2) (e.g., SnO₂), a Sn-based alloy, or a combination thereof.

In one or more embodiments, the Si-based negative electrode active material and/or the Sn-based negative electrode active material may be used in combination with a carbon-based negative electrode active material.

### Separator 30

Depending on the type (kind) of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, for example, a mixed multilayer film such as a polyethylene/polypropylene two-layer separator, a polyethylene/polypropylene/polyethylene three-layer separator, a polypropylene/polyethylene/polypropylene three-layer separator, and/or the like.

The separator 30 may include a porous substrate and a coating layer including an organic material, an inorganic material, or a combination thereof on one or both surfaces (e.g., two opposite surfaces) of the porous substrate.

The porous substrate may be a polymer film formed of any one selected from among polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or a mixture of two or more thereof.

The organic material may include a polyvinylidene fluoride-based polymer or a (meth)acrylic polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but embodiments of the present disclosure are not limited thereto.

In one or more embodiments, the organic material and the inorganic material may be mixed in one coating layer, or a coating layer including an organic material and a coating layer including an inorganic material may be stacked.

### Electrolyte ELL

The electrolyte solution ELL for a rechargeable lithium battery may include a non-aqueous organic solvent and a lithium salt.

The non-aqueous organic solvent may serve as a medium for transmitting ions that take part in an electrochemical reaction of the rechargeable lithium battery.

The non-aqueous organic solvent may be a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like, and the aprotic solvent may include nitriles such as R-CN (wherein R is a C2 to C20 linear, branched, or cyclic hydrocarbon group, and may include a double bond, an aromatic ring, or an ether bond, and/or the like); amides such as dimethylformamide; dioxolanes such as 1,3-dioxolane, 1,4-dioxolane, and/or the like; sulfolanes; and/or the like.

The non-aqueous organic solvents may be used alone or in combination of two or more thereof.

In addition, if (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the non-aqueous organic solvent supplies lithium ions in a rechargeable lithium battery, enables a basic operation of the rechargeable lithium battery, and improves transportation of the lithium ions between the positive electrode and the negative electrode. Non-limiting examples of the lithium salt include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluoro(oxalato)borate(LiDFOB), lithium difluorobis(oxalato)phosphate (LiDFBOP), and lithium bis(oxalato)borate (LiBOB).

### Rechargeable lithium battery

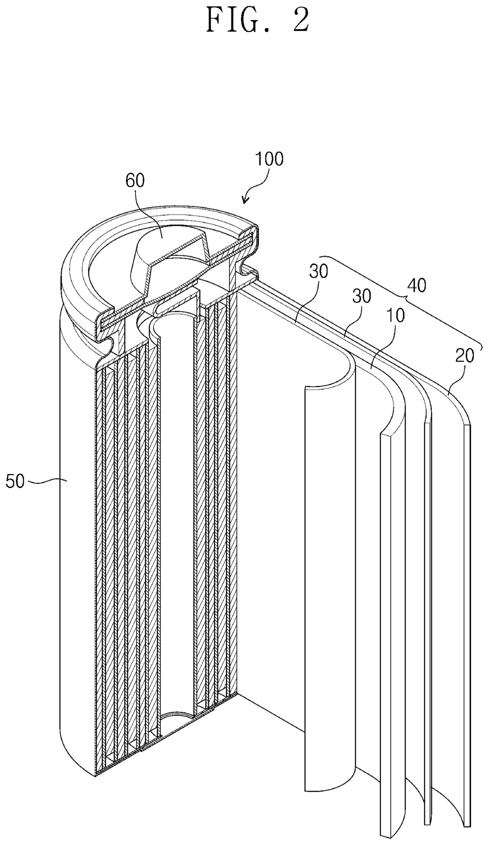

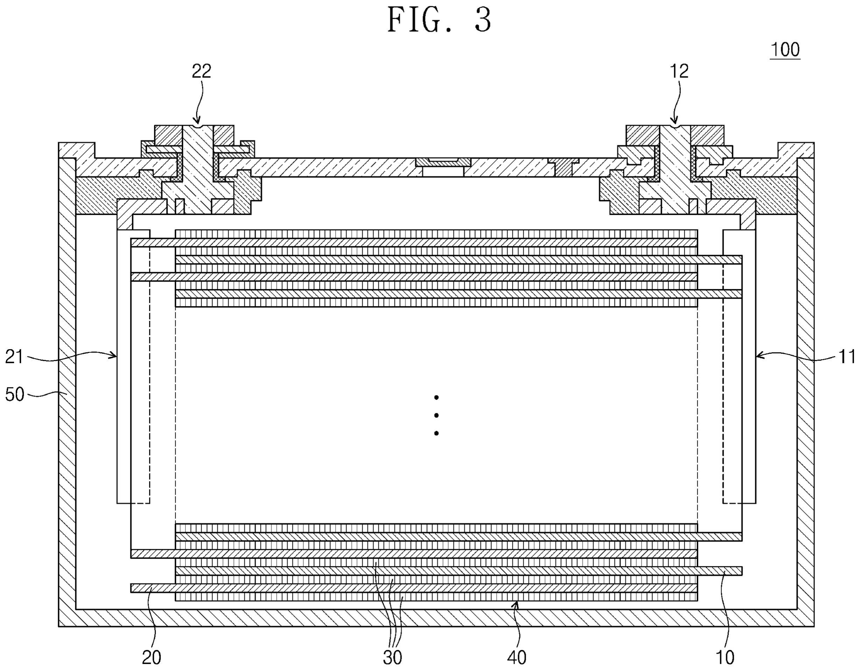

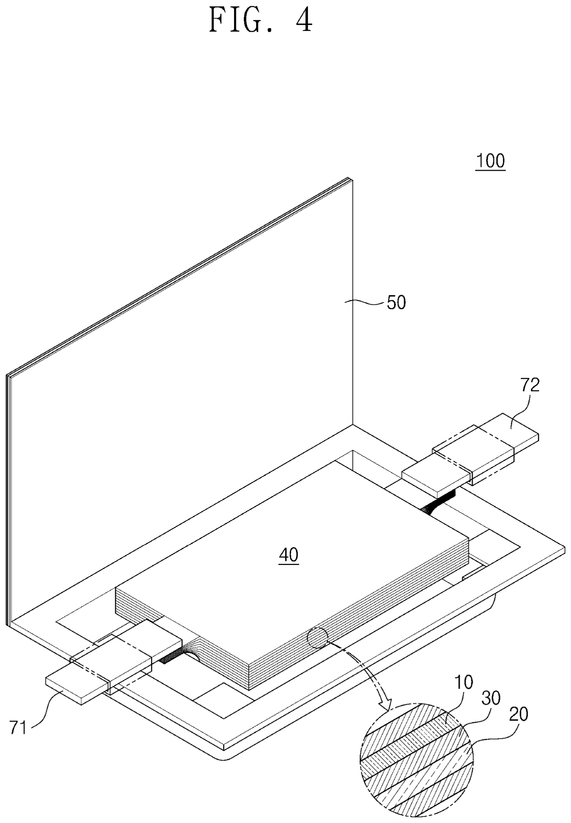

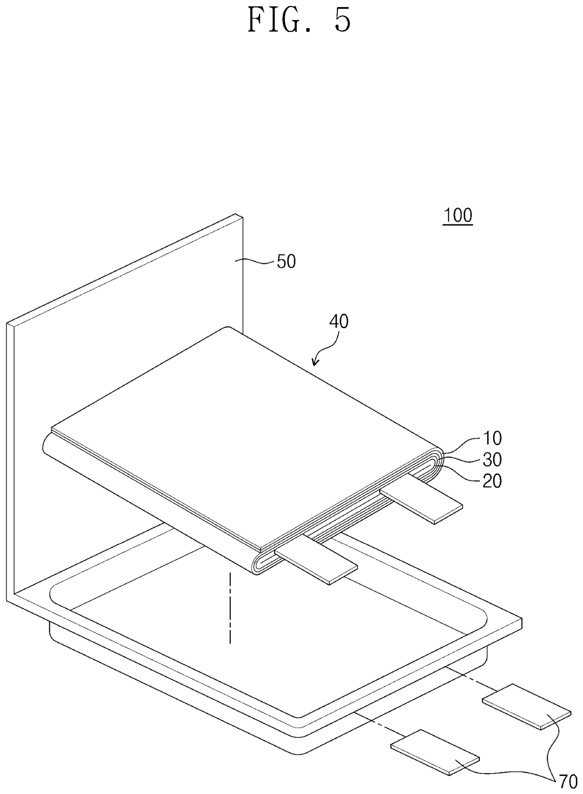

The rechargeable lithium battery may be classified into a cylindrical, prismatic, pouch, or coin-type (kind) battery, and/or the like depending on its shape. FIGS. 2 to 5 are schematic views each illustrating a rechargeable lithium battery according to one or more embodiments of the present disclosure. FIG. 2 shows a cylindrical battery, FIG. 3 shows a prismatic battery, and FIGS. 4 and 5 show pouch-type (kind) batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. In one or more embodiments, the rechargeable lithium battery 100 may include a sealing member 60 sealing the case 50, as shown in FIG. 2. In one or more embodiments, as shown in FIG. 3, the rechargeable lithium battery 100 may include a positive lead tab 11, a positive terminal 12, a negative lead tab 21, and a negative terminal 22. In one or more embodiments, as shown in FIGS. 4 and 5, the rechargeable lithium battery 100 may include an electrode tab 70, which may be, for example, a positive electrode tab 71 and a negative electrode tab 72, serving as an electrical path for inducing the current formed in the electrode assembly 40 to the outside.

The rechargeable lithium battery according to one or more embodiments may be applied to automobiles, mobile phones, and/or one or more suitable types (kinds) of electric devices, as non-limiting examples.

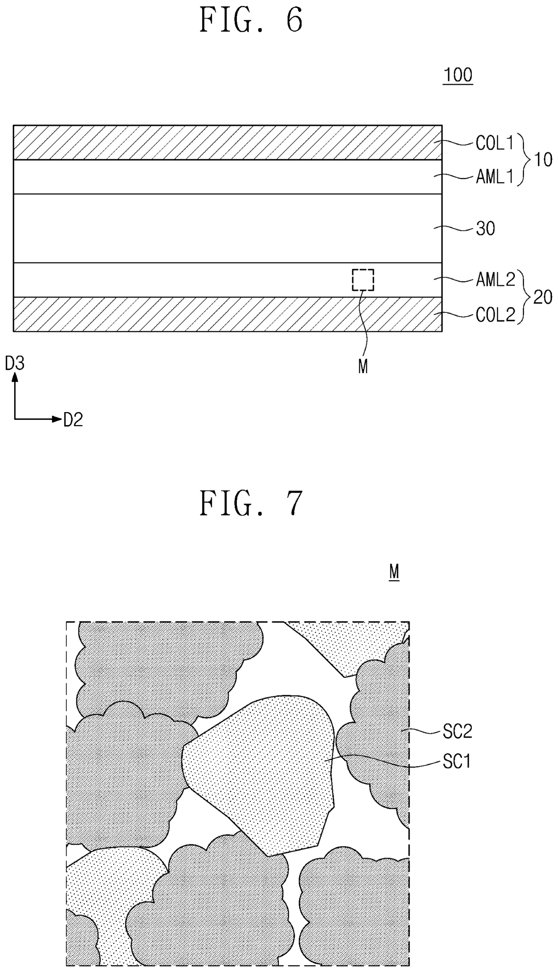

Referring to FIG. 6, as described above with reference to FIG. 1, the rechargeable lithium battery 100 according to one or more embodiments of the present disclosure may include a positive electrode 10, a negative electrode 20, and a separator 30 between the positive electrode 10 and the negative electrode 20. Although not explicitly shown in FIG. 6, the rechargeable lithium battery 100 according to the present disclosure may further include an electrolytic solution ELL. The separator 30 may be impregnated with the electrolytic solution ELL.

The positive electrode 10 may include a positive electrode current collector COL1 and a positive electrode active material layer AML1 on the positive electrode current collector COL1. The negative electrode 20 may include a negative electrode current collector COL2 and a negative electrode active material layer AML2 on the negative electrode current collector COL2. The separator 30 may be interposed between the positive electrode active material layer AML1 and the negative electrode active material layer AML2.

The negative electrode active material layer AML2 may include a negative electrode active material, and may further include a binder and/or a conductive material.

As the negative electrode current collector COL2, one selected from among copper foil, nickel foil, stainless steel foil, titanium foil, nickel foam, copper foam, a polymer substrate coated with a conductive metal, or a combination thereof may be used.

A thickness of the negative electrode current collector COL2 may be about 1 micrometer (µm) to about 20 µm. For example, in one or more embodiments, the thickness of the negative electrode current collector COL2 may be about 5 µm to about 15 µm, about 7 µm to about 10 µm, or about 8 µm to about 10 µm.

The negative electrode 20 according to one or more embodiments of the present disclosure will be described in more detail.

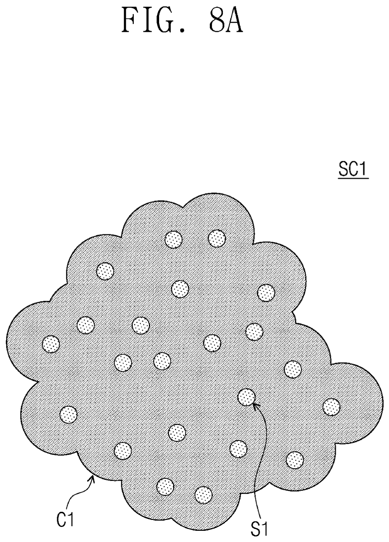

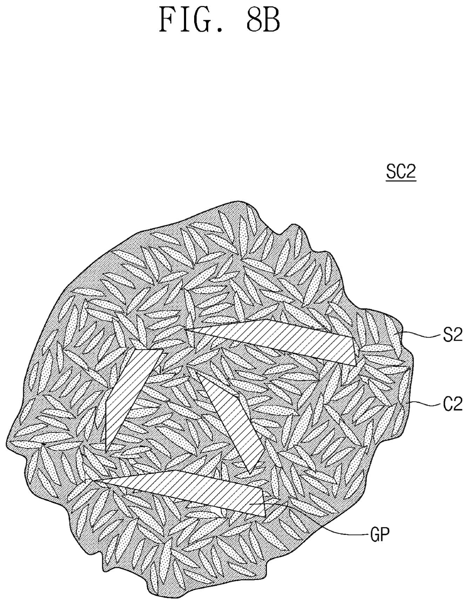

FIG. 7 is an enlarged view according to the M region of FIG. 6 according to one or more embodiments. FIGS. 8A and 8B are diagrams showing a first silicon composite and a second silicon composite of the present disclosure, respectively.

The negative electrode active material layer AML2 may include a first silicon composite SC1 (e.g., in a form of particles) and a second silicon composite SC2 (e.g., in a form of particles). The first silicon composite SC1 may include a first silicon S1 and a first carbon material C1. The second silicon composite SC2 may include a second silicon S2 and a second carbon material C2.

An amount of the first silicon composite SC1 may be less than an amount of the second silicon composite SC2. A ratio SC2/SC1 of the amount of the second silicon composite SC2 to the amount of the first silicon composite SC1 may be about 2 to about 5 (e.g., about 2 to about 4.5, about 2 to about 4, about 2 to about 3.5, about 2 to about 3, about 2 to about 2.5, about 2 to about 2.2. about 2.05 to 2.2, or about 2.05 to about 2.1). For example, in one or more embodiments, the amount of the first silicon composite SC1 may be about 2 parts by weight to about 7 parts by weight (e.g., about 3 parts by weight to about 7 parts by weight, about 3.5 parts by weight to about 7 parts by weight, about 4 parts by weight to about 7 parts by weight, about 4 parts by weight to about 6 parts by weight, about 4 parts by weight to about 5 parts by weight, or about 4 parts by weight to about 4.5 parts by weight), based on 100 parts by weight of the negative electrode active material layer AML2. The amount of the second silicon composite SC2 may be about 5 parts by weight to about 15 parts by weight (e.g., about 5 parts by weight to about 14 parts by weight, about 5 parts by weight to about 13 parts by weight. about 5 parts by weight to about 12 parts by weight, about 5 parts by weight to about 11 parts by weight, about 6 parts by weight to about 11 parts by weight, about 7 parts by weight to about 11 parts by weight, about 8 parts by weight to about 11 parts by weight, about 8.2 parts by weight to about 11 parts by weight, about 8.2 parts by weight to about 10 parts by weight, or about 8.2 parts by weight to about 9 parts by weight), based on 100 parts by weight of the negative electrode active material layer AML2.

The first silicon S1 may be an amorphous silicon, and the second silicon S2 may be a crystalline silicon. The first silicon S1 may have a lower density than the second silicon S2. The first silicon S1 may have higher surface energy and reactivity than the second silicon S2. The first silicon S1 and the second silicon S2 may each have a nanoparticle shape (e.g., in a form of nanoparticle). An average size of the nanoparticles of the first silicon S1 may be about 1 nanometer (nm) to about 10 nm, for example, about 5 nm or less. An average size of the nanoparticles of the second silicon S2 may be about 60 nm to about 100 nm, for example, about 80 nm to about 90 nm. The first silicon S1 and the second silicon S2 may independently have a spherical shape, a plate-like shape, or an elliptical shape.

Each of the first carbon material C1 and the second carbon material C2 may include crystalline carbon, amorphous carbon, or a combination thereof. In one or more embodiments, the crystalline carbon may include graphite, the graphite including natural graphite, artificial graphite, or a combination thereof. The graphite may be in a type (kind) of amorphous, plate-like, flake, spherical, or fibrous. In one or more embodiments, the amorphous carbon may include soft carbon, hard carbon, mesophase pitch carbide, calcined coke, or a combination thereof. In one or more embodiments, the first carbon material C1 may include the soft carbon and the second carbon material C2 may include the hard carbon (e.g., amorphous hard carbon). In one or more embodiments, the first carbon material C1 may include the hard carbon (e.g., amorphous hard carbon) and the second carbon material C2 may include the soft carbon.

Each of the first carbon material C1 of the first silicon composite SC1 and the second carbon material C2 of the second silicon composite SC2 may have a matrix structure. The first silicon S1 of the first silicon composite SC1 may be dispersed in the matrix structure of the first carbon material C1. The second silicon S2 of the second silicon composite SC2 may be dispersed in the matrix structure of the second carbon material C2 and/or may coat the entire matrix structure of the second carbon material C2.

In one or more embodiments, the negative electrode active material layer AML2 may further include a graphite GP. The first silicon composite SC1 and/or the second silicon composite CS2 may further include the graphite GP. For example, the graphite GP may include at least one selected from among the group consisting of natural graphite and artificial graphite. Graphite GP may be natural graphite, artificial graphite, or a combination thereof. Graphite GP may have high ductility and excellent or suitable electrical conductivity.

An amount of the graphite GP may be about 70 parts by weight to about 90 parts by weight, based on 100 parts by weight of the negative electrode active material layer AML2. The first silicon composite CS1 and the second silicon composite CS2 may each include the graphite GP, resulting in the maintenance of the structure of the silicon-carbon composite and providing a negative electrode having better electrical conductivity.

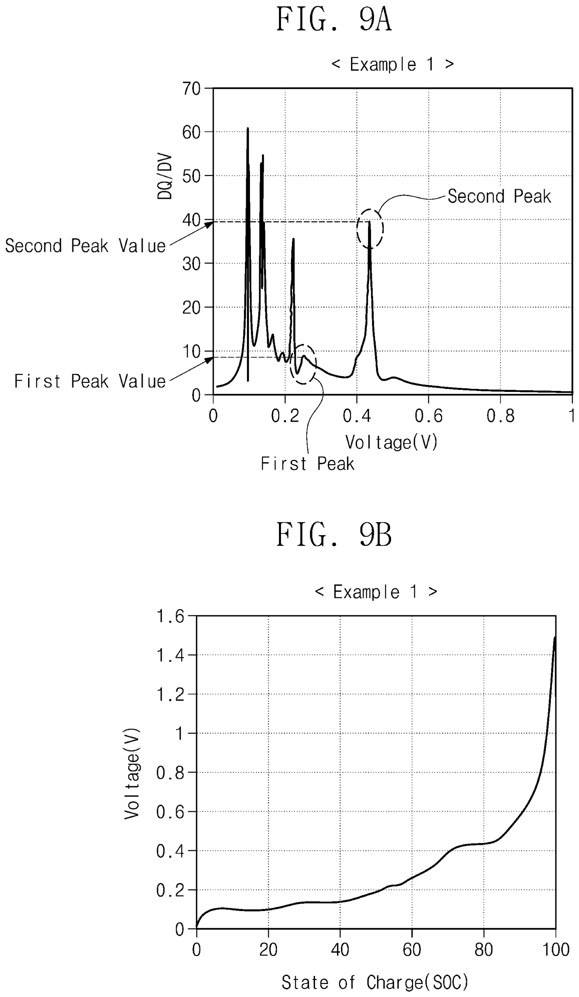

FIG. 9A, FIG. 9B, FIG. 10A, FIG. 10B, FIG. 11A, and FIG. 11B are graphs for describing a negative electrode according to an example or a comparative example of the present disclosure. FIG. 9A, FIG. 10A, and FIG. 11A are each a graph showing DQ/DV values obtained by differentiating the discharge capacity Q of the negative electrode according to the present disclosure with respect to the voltage V during discharge. FIG. 9B, FIG. 10B, and FIG. 11B are each a graph showing the voltage V according to the rate of charge when the negative electrode 20 of the present disclosure is discharged.

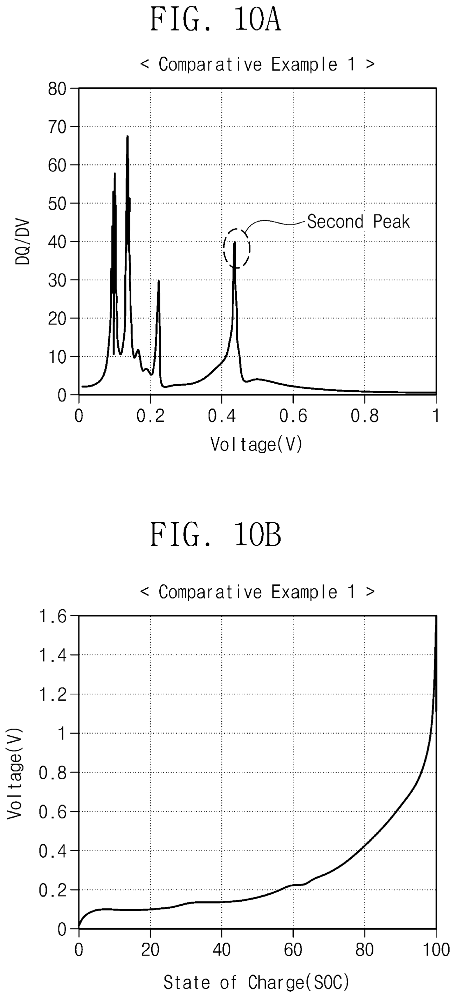

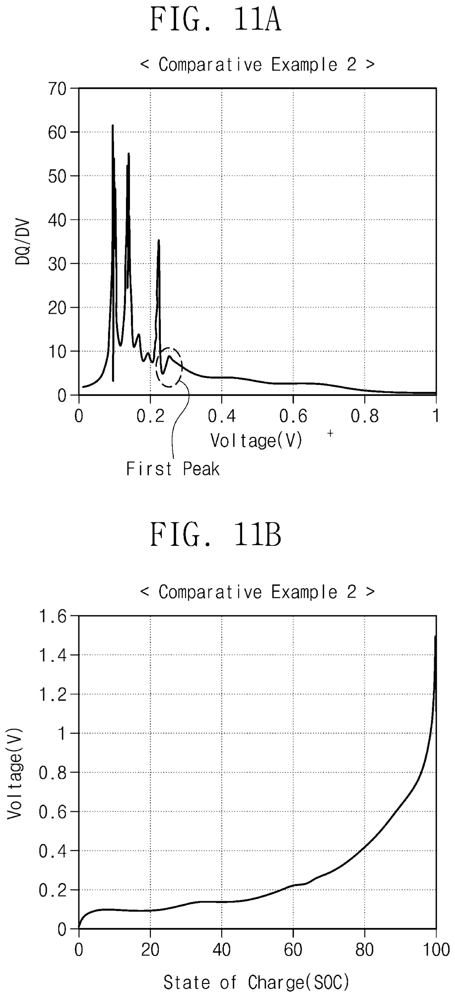

FIG. 9A and FIG. 9B are graphs for the negative electrode 20 of Example 1, which will be described later. FIG. 10A and FIG. 10B are graphs for the negative electrode of Comparative Example 1, and FIG. 11A and FIG. 11B are graphs for the negative electrode of Comparative Example 2, both of which will also be described later.

The discharge capacity Q of the negative electrode 20 may refer to the total amount of charge that the rechargeable lithium battery may deliver if (e.g., when) the rechargeable lithium battery is discharged at a specific current in a fully charged state. DQ/DV represents a value obtained by differentiating the discharge capacity Q with respect to the voltage V, and may indicate a change in the capacity according to the voltage V. DQ/DV may indicate how the capacity changes with the voltage. For example, a large DQ/DV value may indicate that the negative electrode 20 may store or release a large amount of charge at a specific voltage V.

Referring to FIG. 9A and FIG. 9B, a graph showing the DQ/DV according to the voltage V of the negative electrode 20 according to one or more embodiments of the present disclosure may exhibit a first peak in a voltage range of 0.23 V to 0.25 V and a second peak in the voltage range of 0.4 V to 0.5 V. In this regard, the DQ/DV value may exhibit a first peak value that is a maximum value in a voltage range of 0.23 V to 0.25 V, and a second peak value that is the maximum value in the voltage range of 0.4 V to 0.5 V. In the disclosure, the term "peak value" may refer to an amplitude of a peak from its base line.

The first peak may appear due to the first silicon composite SC1. The first peak may indicate a phase transition from the amorphous Li_{3.5}Si phase to the amorphous Li_{2.0}Si phase, and may indicate that the filling depth of silicon is low. This may imply that the degradation of silicon is suppressed or reduced, resulting in excellent or suitable lifetime performance. In addition, the second peak may appear due to the second silicon composite SC2. The second peak may indicate a phase transition from the crystalline Li_{3.75}Si phase to the amorphous Li_{1.1}Si phase, and may indicate that the silicon exhibits a high capacity. Referring again to FIG. 9A, through the inclusion of both (e.g., simultaneously) the first silicon composite SC1 and the second silicon composite SC2 in the negative electrode active material layer 20 according to the present disclosure, both (e.g., simultaneously) the first and second peaks may be observed.

The first peak value may vary according to the amount of the first silicon composite SC1, and the second peak value may vary according to the amount of the second silicon composite SC2. For example, if (e.g., when) the amount of the first silicon composite SC1 increases, the first peak value may also increase. As an example, if (e.g., when) the amount of the second silicon composite SC2 decreases, the second peak value may also decrease. If (e.g., when) a ratio of the second peak value to the first peak value (first peak value/second peak value) increases, the ratio of the amount of the second silicon composite SC2 to the amount of the first silicon composite SC1 may also increase. In contrast, if (e.g., when) the ratio of the second peak value to the first peak value decreases, the ratio of the amount of the second silicon composite SC2 to the amount of the first silicon composite SC1 may also decrease.

The first peak value may be less than the second peak value. In one or more embodiments, the ratio of the second peak value to the first peak value may be between about 3.5 and about 5.5 (e.g., about 4 to about 5, about 4.5 to about 5, about 4.5 to about 4.8, about 4.5 to about 4.7, or about 4.5 to about 4.6). If (e.g., when) the ratio of the second peak value to the first peak value falls outside the above range, the resistance within the rechargeable lithium battery may increase, resulting in deterioration of the energy or lifetime. In contrast, if (e.g., when) the ratio of the second peak value to the first peak value satisfies the above-described range, a negative electrode with improved energy density and lifetime characteristics may be provided. Thus, a rechargeable lithium battery exhibiting excellent or suitable output, capacity, efficiency, and life characteristics may be provided.

The negative electrode active material layer AML2 of the present disclosure may further include the graphite GP, such that the graph showing DQ/DV with respect to voltage may have a plurality of peaks in a voltage range lower than the voltage corresponding to the first peak. For example, the DQ/DV value may further exhibit a plurality of peak values in a voltage range of 0.01 V to 0.23 V due to the graphite.

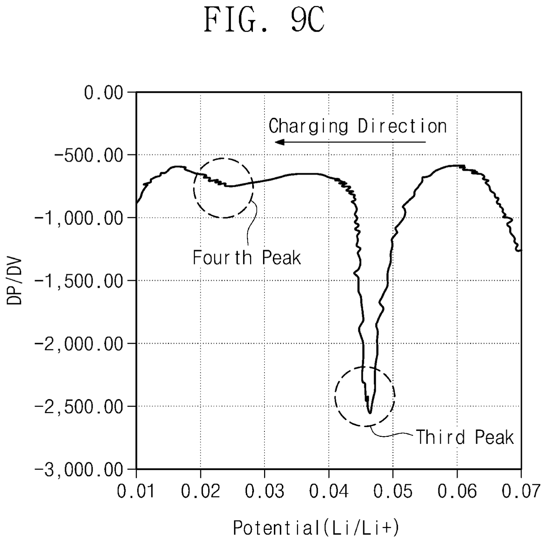

FIG. 9C is a graph showing DP/DV values with respect to the lithium potential (Li/Li⁺) during charging of the negative electrode 20 according to one or more embodiments of the present disclosure. The charging direction may be a direction in which the potential Li/Li⁺ of lithium decreases. The negative electrode 20 according to one or more embodiments of the present disclosure may have a DP/DV value obtained by differentiating the charge capacity P of the negative electrode with respect to the voltage V during charging. The charge capacity P of the negative electrode 20 may indicate the amount of charge stored in the rechargeable lithium battery. DP/DV may be a value obtained by differentiating the charge capacity P with respect to the voltage V, and may indicate a change in capacity according to the voltage V.

The graph showing the DP/DV value with respect to the voltage V of the negative electrode 20 according to the present disclosure may exhibit a third peak in a voltage range of about 0.04 V to about 0.05 V, and a fourth peak in the voltage range of about 0.02 V to about 0.03 V. In this regard, the DP/DV value may exhibit a third peak value that is a minimum value in a voltage range of about 0.04 V to about 0.05 V, and a fourth peak value that is a minimum value in the voltage range of about 0.02 V to about 0.03 V.

An absolute value of the third peak value may be less than an absolute value of the fourth peak value. In one or more embodiments, a ratio of the third peak value to the fourth peak value may be about 2 to about 4. If (e.g., when) the ratio of the fourth peak value to the third peak value satisfies the above-described range, a negative electrode exhibiting a better energy density and a better lifetime may be provided. Thus, a rechargeable lithium battery exhibiting excellent or suitable output, capacity, efficiency, and life characteristics may be provided.

A plurality of peaks may be observed in the XRD spectrum (X-ray diffraction pattern) for the negative electrode 20 according to the present disclosure.

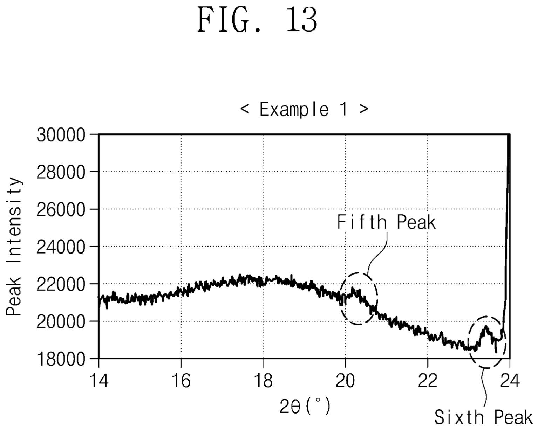

For example, referring to FIG. 13, the X-ray diffraction pattern of the negative electrode 20 according to one or more embodiments of the present disclosure may have a fifth peak in a range in a diffraction angle 2θ range of about 20° to about 21°, and a sixth peak in the diffraction angle 2θ range of about 23° to about 24°. The X-ray diffraction pattern of the negative electrode 20 according to one or more embodiments may have a fifth peak value that is a maximum peak intensity in the diffraction angle 2θ range of about 20° to about 21°, and a sixth peak value that is the maximum peak intensity in the diffraction angle 2θ range of about 23° to about 24°.Through the inclusion of both (e.g., simultaneously) the first silicon composite SC1 and the second silicon composite SC2 in the negative electrode active material layer 20 according to the present disclosure, both (e.g., simultaneously) the fifth and sixth peaks may be observed. In the absence of the first silicon composite SC1 or the second silicon composite SC2, the fifth peak or the sixth peak may not be observed.

The negative electrode for a rechargeable lithium battery according to one or more embodiments of the present disclosure may secure both (e.g., simultaneously) advantages of the first silicon composite SC1 having an excellent or suitable lifetime and advantages of the second silicon composite SC2 having a high capacity and a high energy density. The negative electrode 20 according to the present disclosure may include a combination of different types (kinds) of first silicon composite and second silicon composite, thereby achieving high capacity and energy density while more effectively improving rate characteristics and lifetime characteristics.

For example, the present disclosure provides a negative electrode architecture for a rechargeable lithium battery that integrates two functionally distinct silicon-carbon composites-amorphous silicon-based (SC1) and crystalline silicon-based (SC2)-within a conductive carbon matrix. This dual-composite configuration is engineered to exploit the high capacity of crystalline silicon while mitigating its mechanical instability through the buffering effect and structural resilience of amorphous silicon. The carbon matrices, optionally reinforced with graphite, enhance electrical conductivity and structural cohesion. By precisely controlling the ratio of SC1 to SC2 and analyzing electrochemical signatures such as DQ/DV and DP/DV profiles, the electrode design enables fine-tuning of performance characteristics including energy density, rate capability, and cycle life. This approach not only addresses the volumetric expansion and degradation challenges to silicon-based electrodes but also provides a scalable pathway for manufacturing high-performance lithium batteries suitable for demanding applications such as electric vehicles and/or portable electronics.

The following Examples and Comparative Examples are provided in order to highlight characteristics of one or more embodiments, but it will be understood that the Examples and Comparative Examples are not to be construed as limiting the scope of the embodiments, nor are the Comparative Examples to be construed as being outside the scope of the embodiments. Further, it will be understood that the embodiments are not limited to the particular details described in the Examples and Comparative Examples.

### Example 1

### Preparation of First Silicon Composite

A mixture was prepared by mixing lignin and Fe (average particle size D50: 100 nm) in an 80:20 weight ratio. The mixture was heat treated at 1500 °C under an N₂ atmosphere to produce a heat-treated product including Fe and artificial graphite. The heat-treated product was immersed in hydrochloric acid to prepare an Fe-removed porous carbon matrix. The porous carbon matrix includes soft carbon.

Amorphous silicon was deposited onto/into the manufactured porous carbon matrix using chemical vapor deposition (CVD). In this process, a first silicon composite was prepared in which amorphous silicon was dispersed inside the porous carbon matrix.

### Preparation of Second Silicon Composite

Micro-sized crystalline silicon particles (average particle diameter 1 µm to 5 µm) were ball-milled to prepare crystalline silicon particles having an average particle diameter of 80 nm to 90 nm. Crystalline silicon particles, stearic acid, and ethanol were mixed at a weight ratio of 9:1:10 to prepare a dispersion. Using a spray dryer, the dispersion was spray-dried at a temperature of 120 °C.

Under an N₂ atmosphere, the spray-dried product and the mesocarbon pitch were mixed at a weight ratio of 50:20 and heat-treated at a temperature of 900 °C to 1000 °C to form a coating layer containing amorphous hard carbon. As a result, a second silicon composite including crystalline silicon particles and amorphous hard carbon was prepared.

### Negative Electrode

A negative electrode active material may be prepared by mixing graphite, the first silicon composite, and the second silicon composite. A negative electrode active material layer slurry was prepared by mixing 98 parts by weight of the negative electrode active material (85.8 parts by weight of the graphite, 4 parts by weight of the first silicon composite, and 8.2 part by weight of the second silicon composite), 1 part by weight of carboxymethyl cellulose, and 1 part by weight of styrene butadiene rubber in a water solvent.

The negative electrode active material layer slurry was coated, dried, and rolled on a Cu foil current collector to prepare a negative electrode.

### Rechargeable lithium Battery

The negative electrode, a lithium metal counter electrode, and an electrolytic solution were used to produce a half battery in a general (suitable) process. As the electrolytic solution, a mixed solution of ethylene carbonate, dimethyl carbonate, and ethylmethyl carbonate in which 1 *M* LiPF6 was dissolved (mixing ratio of ethylene carbonates : dimethyl carbonates : ethylmethyl carbonates = 30 : 40 : 30 by volume) was used.

### Example 2

The negative electrode active material was prepared using 82 parts by weight of the graphite, 5 parts by weight of the first silicon composite, and 11 parts by weight of the second silicon composite. Except for this, a rechargeable lithium battery was prepared in substantially the same manner as in Example 1.

### Comparative Example 1

The negative electrode active material was prepared using 85 parts by weight of the graphite and 13 parts by weight of the second silicon composite. Except for this, a rechargeable lithium battery was prepared in substantially the same manner as in Example 1.

### Comparative Example 2

The negative electrode active material was prepared using 87.8 parts by weight of the graphite and 10.2 parts by weight of the first silicon composite. Except for this, a rechargeable lithium battery was prepared in substantially the same manner as in Example 1.

### Comparative Example 3

The negative electrode active material was prepared using 80 parts by weight of the graphite, 3 parts by weight of the first silicon composite, and 15 parts by weight of the second silicon composite. Except for this, a rechargeable lithium battery was prepared in substantially the same manner as in Example 1.

Examples and comparative examples of the present disclosure prepared as described above are shown in Table 1. The contents (e.g., amounts) of the materials in Table 1 are expressed in parts by weight of the respective materials with respect to 100 parts by weight of a negative electrode active material layer.

**Table 1**

| | Graphite [Weight Parts] | Amount of First Silicon Composite (X) [Weight Parts] | Amount of Second Silicon Composite (Y) [Weight Parts] | Y/X | Second peak value /First peak value |
|---|---|---|---|---|---|
| Example 1 | 85.8 | 4 | 8.2 | 2.05 | 4.5 |
| Example 2 | 82 | 5 | 11 | 2.2 | 4.8 |
| Comparative Example 1 | 85 | 0 | 13 | - | - |
| Comparative Example 2 | 87.8 | 10.2 | 0 | - | - |
| Comparative Example 3 | 80 | 3 | 15 | 5 | 6 |

### Evaluation Example 1: DQ/DV Measurement

The DQ/DV value respect to the voltage V of the rechargeable lithium battery according to each of the examples and the comparative examples was measured. For example, after fully charging the rechargeable lithium battery, the rechargeable lithium battery was discharged under a current of 0.04 C in order to observe a peak. The elapsed time t after starting the discharge was measured, and the discharge capacity Q was calculated according to the following Equation 1. $Q = I \times t$ Equation 1

In Equation 1, Q represents the discharge capacity, I represents the current, and t represents the elapsed time.

The DQ/DV value, which represents the rate of change of the discharge capacity (Q) with respect to the voltage (V), was calculated using the calculated discharge capacity Q.

In this measurement, a coin-type half-cell was fabricated using the negative electrode according to the present invention as a working electrode and lithium metal as a counter electrode. The measurement was performed under a constant temperature of 25 °C. The cell was charged and discharged at a constant current of 0.04 C within a voltage range of 0.005 V to 1.5 V while recording the charge/discharge voltage-capacity (Q-V) profile. The differential capacity curve (dQ/dV) was derived from the recorded data, and the positions and magnitudes of the peaks were determined. Such measurement conditions correspond to those generally used for evaluating the electrochemical characteristics of negative electrode materials in rechargeable lithium batteries.

Referring to FIGS. 9B, 10B, and 11B, the rechargeable lithium batteries according to Example 1, Comparative Example 1, and Comparative Example 2 were each fully charged. The discharge results of these batteries are respectively shown in FIGS. 9A, 10B, and 11B.

Referring to FIG. 9A, the ratio of the second peak value to the first peak value according to Example 1 is 4.5. The ratio of the second peak value to the first peak value according to Example 2 is 4.8. This confirms that the negative electrode active material layer includes both (e.g., simultaneously) the first silicon composite and the second silicon composite.

In contrast, referring to FIG. 10A, a first peak is not observed, and a second peak is observed. This is because Comparative Example 1 does not include the first silicon composite SC1, but includes the second silicon composite SC2. Referring to FIG. 11A, a second peak is not observed, and a first peak is observed. This is because Comparative Example 2 does not include the second silicon composite SC2 but includes the first silicon composite SC1.

The ratio of the second peak value to the first peak value according to Comparative Example 3 is 6. The ratio of the second peak value to the first peak value of each of the Examples and Comparative Examples is shown in Table 1.

### Evaluation Example 2: SEM Analysis

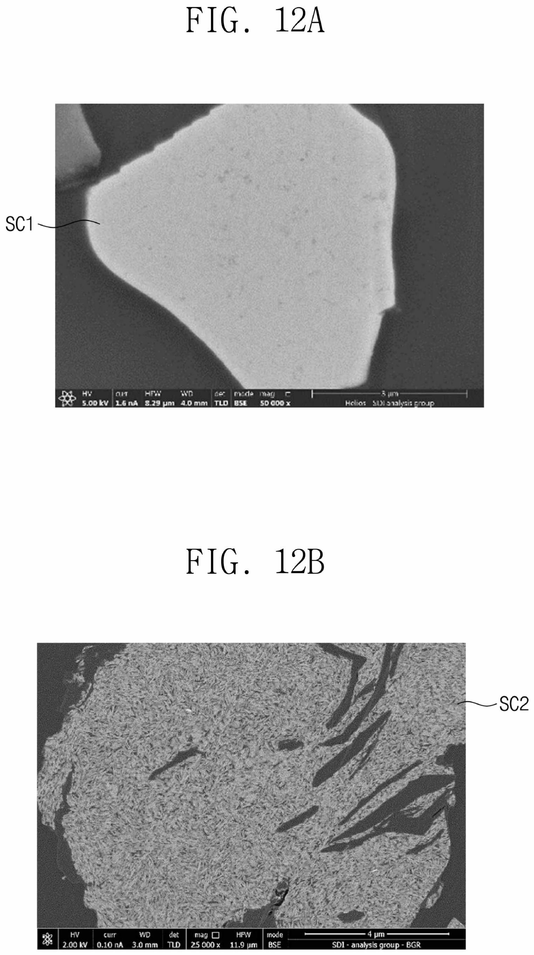

To identify the first silicon composite and the second silicon composite of Example 1, scanning electron microscope (SEM) analysis was performed. FIG. 12A and FIG. 12B are SEM images of the first silicon composite and the second silicon composite of the present disclosure, respectively.

Referring to FIG. 12A and FIG. 12B, it can be seen that the average particle diameter of the first silicon composite is about 6 µm, and that the average particle size of the second silicon composite is about 10 µm. This confirms that the first and second silicon composites are well prepared.

### Evaluation Example 3: XRD Analysis

The negative electrode active material layer according to Example 1 was subjected to X-ray diffraction analysis (XRD), and the results thereof are shown in FIG. 13. Referring to FIG. 13, in the XRD spectrum based on 2θ, the fifth peak is observed at 20° to 21°, and the sixth peak is observed at 23° to 24°. When both (e.g., simultaneously) the fifth peak and the sixth peak are observed, it can be confirmed that the graphite, the first silicon composite, and the second silicon composite are all mixed, and the negative electrode active material layer is well prepared.

### Evaluation Example 4: Evaluation of Life Characteristics

The life characteristics of each of the rechargeable lithium batteries according to Examples and Comparative Examples were evaluated. The batteries were each initially charged to an upper limit voltage of 4.25 V at a constant current of 0.1 C at 25 °C, and then discharged to a cutoff voltage of 3.5 V at a constant current of 0.1 C to perform initial charge and discharge (formation cycle). Thereafter, charging and discharging were repeated 100 times at a 0.5 C rate in a voltage range of 3.5 V to 4.25 V. The discharge capacity was measured over 100 cycles, and a capacity retention defined by a percentage of the discharge capacity at 100^{th} cycle with respect to the discharge capacity at the formation cycle for each battery is shown in Table 2.

**Table 2**

| | Capacity Retention (%, @100cycle) |
|---|---|
| Example 1 | 93.5 |
| Example 2 | 92.1 |
| Comparative Example 1 | 87.0 |
| Comparative Example 2 | 84.7 |
| Comparative Example 3 | 86.3 |

Referring to Comparative Example 1 and Comparative Example 2, it can be seen that when one of the first silicon composite and the second silicon composite is not included, the life characteristics of the battery deteriorate. In particular, in the case of Comparative Example 2 including only the second silicon composite, the life characteristics of the battery were significantly deteriorated. As a result, it can be confirmed that the life characteristics are improved only if (e.g., when) the graphite, the first silicon composite, and the second silicon composite are all contained.

Referring to Comparative Example 3, the ratio of the second peak value to the first peak value was 6, which was higher than that of Examples 1 and 2. This represents that the amount of the second silicon composite is relatively high in the negative electrode according to the Comparative Example 3. Thus, it can be seen that the first silicon composite and the second silicon composite should be mixed in an appropriate or suitable ratio to improve the life characteristics without deteriorating the energy density.

A negative electrode according to one or more embodiments of the present disclosure and a rechargeable lithium battery including the same may have excellent or suitable capacity, efficiency, energy density, and life characteristics. Furthermore, according to one or more embodiments of the present disclosure, it may provide an economical negative electrode and a cost-effective rechargeable lithium battery by including different first and second silicon composites.

In the present disclosure, expressions such as "at least one of," "one of," and "selected from," when preceding a list of elements, modify the entire list of elements and do not modify the individual elements of the list. For example, "at least one of a, b or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

In the context of the present disclosure and unless otherwise defined, the terms "use," "using," and "used" may be considered synonymous with the terms "utilize," "utilizing," and "utilized," respectively.

In present disclosure, the term "Group" as utilized herein refers to a group of the Periodic Table of Elements according to the 1 to 18 grouping system of the International Union of Pure and Applied Chemistry ("IUPAC").

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, or 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

A battery manufacturing device, a battery management system (BMS) device, and/or any other relevant devices or components according to embodiments of the present invention described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

Also, it should be understood that, even if the terms "about," "approximately," or "substantially" are not expressly recited in a given element (e.g., a claim element), the scope of such element is intended to include variations that are insubstantial or within the understanding of one of ordinary skill in the art. For example, numerical values and ranges provided herein are intended to include tolerances and measurement uncertainties that would be recognized by those skilled in the art, and the elements (e.g., claim elements) should be construed accordingly to encompass such equivalents.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

While the present disclosure has been described with reference to example embodiments, it should be understood that these embodiments are provided for illustrative purposes only and do not limit the scope of the present disclosure. Various modifications and equivalent arrangements may be made without departing from the scope of the appended claims and equivalents thereof. Accordingly, the described embodiments should be regarded as examples rather than limitations of the present disclosure.

Embodiments are set out in the following clauses:
Clause 1. A negative electrode for a rechargeable lithium battery, the negative electrode, comprising:
   a negative electrode current collector; and
   a negative electrode active material layer on the negative electrode current collector,
   wherein the negative electrode active material layer comprises a first silicon composite and a second silicon composite,
   wherein the first silicon composite comprises amorphous silicon and a first carbon material,
   wherein the second silicon composite comprises crystalline silicon and a second carbon material,
   wherein the negative electrode has a DQ/DV value obtained by differentiating a discharge capacity Q of the negative electrode with respect to a voltage V,
      wherein the DQ/DV value comprises:
      a first peak value that is a maximum value in a voltage range of about 0.23 V to about 0.25 V; and
      a second peak value that is a maximum value in a voltage range of about 0.4 V to about 0.5 V, and
      wherein a ratio of the second peak value to the first peak value is about 3.5 to about 5.5.
Clause 2. The negative electrode of clause 1,
   wherein the negative electrode further comprises a graphite,
   wherein an amount of the graphite is about 70 parts by weight to about 90 parts by weight based on 100 parts by weight of the negative electrode active material layer, and
   wherein the DQ/DV value has a plurality of peak values in a voltage range of about 0.01 V to about 0.23 V resulting from the graphite.
Clause 3. The negative electrode of clause 1 or clause 2,
   wherein the negative electrode has a DP/DV value obtained by differentiating a charge capacity P of the negative electrode with respect to the voltage V, and
   wherein the DP/DV value comprises:
      a third peak value that is a maximum value in a voltage range of about 0.04 V to about 0.05 V; and
      a fourth peak value that is a maximum value in a voltage range of about 0.02 V to about 0.03 V.
Clause 4. The negative electrode of clause 3,
   wherein a ratio of the fourth peak value to the third peak value is about 2 to about 4.
Clause 5. The negative electrode of any one of clauses 1 to 4,
   wherein an amount of the first silicon composite is less than an amount of the second silicon composite.
Clause 6. The negative electrode of any one of clauses 1 to 5,
   wherein a ratio of an amount of the second silicon composite to an amount of the first silicon composite is about 2 to about 5.
Clause 7. The negative electrode of any one of clauses 1 to 6,
   wherein an amount of the first silicon composite is about 2 parts by weight to about 7 parts by weight, based on 100 parts by weight of the negative electrode active material layer.
Clause 8. The negative electrode of any one of clauses 1 to 7,
   wherein an amount of the second silicon composite is about 5 parts by weight to about 15 parts by weight, based on 100 parts by weight of the negative electrode active material layer.
Clause 9. The negative electrode of any one of clauses 1 to 8,
   wherein the first carbon material comprises an amorphous hard carbon, and
   the second carbon material comprises a soft carbon.
Clause 10. The negative electrode of any one of clauses 1 to 9,
   wherein an X-ray diffraction pattern of the negative electrode comprises:
   a fifth peak value that is a maximum peak intensity in a diffraction angle 2θ range of about 20° to about 21°; and
   a sixth peak value that is a maximum peak intensity in a diffraction angle 2θ range of about 23° to about 24°.
Clause 11. The negative electrode of any one of clauses 1 to 10,
   wherein each of the first and second carbon materials comprises a matrix structure,
   wherein the amorphous silicon is dispersed in the matrix structure of the first carbon material, and
   wherein the crystalline silicon is dispersed in the matrix structure of the second carbon material.
Clause 12. The negative electrode of any one of clauses 1 to 11,
   wherein each of the amorphous silicon and the crystalline silicon has a nanoparticle form,
   wherein an average particle diameter of the nanoparticle of the amorphous silicon is about 1 nm to about 10 nm, and
   wherein an average particle diameter of the nanoparticle of the crystalline silicon is about 60 nm to about 100 nm.
Clause 13. The negative electrode of any one of clauses 1 to 12,
   wherein the negative electrode active material layer further comprises at least one of a binder, a conductive material, or a combination thereof.
Clause 14. A negative electrode for a rechargeable lithium battery, the negative electrode, comprising:
   a negative electrode collector; and
   a negative electrode active material layer on the negative electrode collector,
   wherein the negative electrode active material layer comprises a graphite, a first silicon composite, and a second silicon composite,
   wherein the first silicon composite comprises amorphous silicon and a first carbon material,
   wherein the second silicon composite comprises crystalline silicon and a second carbon material, and
   wherein a ratio of an amount of the second silicon composite to an amount of the first silicon composite is about 2 to about 5.
Clause 15. The negative electrode of clause 14,
   wherein the negative electrode has a DQ/DV value obtained by differentiating a discharge capacity Q of the negative electrode with respect to a voltage V,
   wherein the DQ/DV value comprises:
      a first peak value that is a maximum value in a voltage range of about 0.23 V to about 0.25 V; and
      a second peak value that is a maximum value in a voltage range of about 0.4 V to about 0.5 V, and
      wherein a ratio of the second peak value to the first peak value is about 3.5 to about 5.5.
Clause 16. The negative electrode of clause 15,
   wherein the DQ/DV value has a plurality of peaks in a voltage range of about 0.01 V to about 0.23 V.
Clause 17. The negative electrode of any one of clauses 14 to 16,
   wherein the first carbon material comprises an amorphous hard carbon, and
   wherein the second carbon material comprises a soft carbon.
Clause 18. The negative electrode of any one of clauses 14 to 17,
   wherein the amount of the first silicon composite is about 2 parts by weight to about 7 parts by weight, based on 100 parts by weight of the negative electrode active material layer, and
   wherein the amount of the second silicon composite is about 5 parts by weight to about 15 parts by weight, based on 100 parts by weight of the negative electrode active material layer.
Clause 19. The negative electrode of any one of clauses 14 to 18,
   wherein an X-ray diffraction pattern of the negative electrode comprises:
   a fifth peak value that is a maximum peak intensity in a diffraction angle 2θ range of about 20° to about 21°; and
   a sixth peak value that is a maximum peak intensity in a diffraction angle 2θ range of about 23° to about 24°.
Clause 20. A rechargeable lithium battery comprising:
   the negative electrode according to any one of clauses 1 to 19;
   a positive electrode; and
   a separator disposed between the negative electrode and the positive electrode.

## Claims

1. A negative electrode, comprising:
a negative electrode current collector; and
a negative electrode active material layer on the negative electrode current collector,
wherein the negative electrode active material layer comprises a first silicon composite and a second silicon composite,
wherein the first silicon composite comprises amorphous silicon and a first carbon material,
wherein the second silicon composite comprises crystalline silicon and a second carbon material,
wherein the negative electrode has a DQ/DV value obtained by differentiating a discharge capacity Q of the negative electrode with respect to a voltage V,
wherein the DQ/DV value comprises:
a first peak value that is a maximum value in a voltage range of 0.23 V to 0.25 V; and
a second peak value that is a maximum value in a voltage range of 0.4 V to 0.5 V,
wherein a ratio of the second peak value to the first peak value is 3.5 to 5.5, and
wherein the negative electrode is a negative electrode for a rechargeable lithium battery.

2. The negative electrode as claimed in claim 1,
wherein the negative electrode active material layer further comprises a graphite,
wherein an amount of the graphite is 70 parts by weight to 90 parts by weight based on 100 parts by weight of the negative electrode active material layer, and
wherein the DQ/DV value further comprises a plurality of peak values in a voltage range of 0.01 V to 0.23 V from the graphite.

3. The negative electrode as claimed in claim 1 or claim 2,
wherein the negative electrode has a DP/DV value obtained by differentiating a charge capacity P of the negative electrode with respect to the voltage V, and
wherein the DP/DV value comprises:
a third peak value that is a minimum value in a voltage range of 0.04 V to 0.05 V; and
a fourth peak value that is a minimum value in a voltage range of 0.02 V to 0.03 V;
optionally wherein a ratio of the third peak value to the fourth peak value is 2 to 4.

4. The negative electrode as claimed in any one of claims 1 to 3,
wherein an amount of the first silicon composite is less than an amount of the second silicon composite in the negative electrode active material layer.

5. The negative electrode as claimed in any one of claims 1 to 4,
wherein a ratio of an amount of the second silicon composite to an amount of the first silicon composite is 2 to 5.

6. The negative electrode as claimed in any one of claims 1 to 5,
wherein an amount of the first silicon composite is 2 parts by weight to 7 parts by weight, based on 100 parts by weight of the negative electrode active material layer.

7. The negative electrode as claimed in any one of claims 1 to 6,
wherein an amount of the second silicon composite is 5 parts by weight to 15 parts by weight, based on 100 parts by weight of the negative electrode active material layer.

8. The negative electrode as claimed in any one of claims 1 to 7,
wherein the first carbon material comprises a soft carbon, and
the second carbon material comprises an amorphous hard carbon.

9. The negative electrode as claimed in any one of claims 1 to 8,
wherein an X-ray diffraction pattern of the negative electrode comprises:
a fifth peak value that is a maximum peak intensity in a diffraction angle 2θ range of 20° to 21°; and
a sixth peak value that is a maximum peak intensity in a diffraction angle 2θ range of 23° to 24°.

10. The negative electrode as claimed in any one of claims 1 to 9,
wherein each of the first carbon material and the second carbon material comprises a matrix structure,
wherein the amorphous silicon is dispersed in the matrix structure of the first carbon material, and
wherein the crystalline silicon is dispersed in the matrix structure of the second carbon material.

11. The negative electrode as claimed in any one of claims 1 to 10,
wherein each of the amorphous silicon and the crystalline silicon is in a form of nanoparticle,
wherein an average particle diameter of the nanoparticle of the amorphous silicon is 1 nm to 10 nm, and
wherein an average particle diameter of the nanoparticle of the crystalline silicon is 60 nm to 100 nm; and/or
wherein the negative electrode active material layer further comprises a binder, a conductive material, or a combination thereof.

12. A negative electrode, comprising:
a negative electrode collector; and
a negative electrode active material layer on the negative electrode collector,
wherein the negative electrode active material layer comprises a graphite, a first silicon composite, and a second silicon composite,
wherein the first silicon composite comprises amorphous silicon and a first carbon material,
wherein the second silicon composite comprises crystalline silicon and a second carbon material,
wherein a ratio of an amount of the second silicon composite to an amount of the first silicon composite is 2 to 5, and
wherein the negative electrode is a negative electrode for a rechargeable lithium battery.

13. The negative electrode as claimed in claim 12,
wherein the negative electrode has a DQ/DV value obtained by differentiating a discharge capacity Q of the negative electrode with respect to a voltage V,
wherein the DQ/DV value comprises:
a first peak value that is a maximum value in a voltage range of 0.23 V to 0.25 V; and
a second peak value that is a maximum value in a voltage range of 0.4 V to 0.5 V, and
wherein a ratio of the second peak value to the first peak value is 3.5 to 5.5;
optionally wherein the DQ/DV value further comprises a plurality of peaks in a voltage range of 0.01 V to 0.23 V.

14. The negative electrode as claimed in claim 12 or claim 13, wherein:
(i) the first carbon material comprises a soft carbon, and
the second carbon material comprises an amorphous hard carbon; and/or
(ii) the amount of the first silicon composite is 2 parts by weight to 7 parts by weight, based on 100 parts by weight of the negative electrode active material layer; and/or
(iii) the amount of the second silicon composite is 5 parts by weight to 15 parts by weight, based on 100 parts by weight of the negative electrode active material layer; and/or
(iv) wherein an X-ray diffraction pattern of the negative electrode comprises:
a fifth peak value that is a maximum peak intensity in a diffraction angle 2θ range of 20° to 21°; and
a sixth peak value that is a maximum peak intensity in a diffraction angle 2θ range of 23° to 24°.

15. A rechargeable lithium battery comprising:
the negative electrode according to any one of claims 1 to 14;
a positive electrode; and
a separator between the negative electrode and the positive electrode.

## Amended claims

### Amended claims in accordance with Rule 137(2) EPC.

1. A negative electrode (20), comprising:
a negative electrode current collector (COL2); and
a negative electrode active material layer (AML2) on the negative electrode current collector (COL2),
wherein the negative electrode active material layer (AML2) comprises a first silicon composite (SC1) and a second silicon composite (SC2),
wherein the first silicon composite (SC1) comprises amorphous silicon (S1) and a first carbon material (C1),
wherein the second silicon composite (SC2) comprises crystalline silicon (S2) and a second carbon material (C2),
wherein the negative electrode (20) has a DQ/DV value obtained by using the negative electrode (20) as a working electrode and lithium metal as a counter electrode, charging and discharging at a constant current of 0.04 C within a voltage range of 0.005 V to 1.5 V while recording the charge/discharge voltage-capacity profile under a constant temperature of 25 °C, and differentiating a discharge capacity Q of the negative electrode (20) with respect to a voltage V,
wherein the DQ/DV value comprises:
a first peak value that is a maximum value in a voltage range of 0.23 V to 0.25 V; and
a second peak value that is a maximum value in a voltage range of 0.4 V to 0.5 V,
wherein a ratio of the second peak value to the first peak value is 3.5 to 5.5, and
wherein the negative electrode (20) is a negative electrode for a rechargeable lithium battery (100).

2. The negative electrode (20) as claimed in claim 1,
wherein the negative electrode active material layer (AML2) further comprises a graphite,
wherein an amount of the graphite is 70 parts by weight to 90 parts by weight based on 100 parts by weight of the negative electrode active material layer (AML2), and
wherein the DQ/DV value further comprises a plurality of peak values in a voltage range of 0.01 V to 0.23 V from the graphite.

3. The negative electrode (20) as claimed in claim 1 or claim 2,
wherein the negative electrode (20) has a DP/DV value obtained by differentiating a charge capacity P of the negative electrode (20) with respect to the voltage V, and
wherein the DP/DV value comprises:
a third peak value that is a minimum value in a voltage range of 0.04 V to 0.05 V; and
a fourth peak value that is a minimum value in a voltage range of 0.02 V to 0.03 V;
optionally wherein a ratio of the third peak value to the fourth peak value is 2 to 4.

4. The negative electrode (20) as claimed in any one of claims 1 to 3,
wherein an amount of the first silicon composite (SC1) is less than an amount of the second silicon composite (SC2) in the negative electrode active material layer (AML2).

5. The negative electrode (20) as claimed in any one of claims 1 to 4,
wherein a ratio of an amount of the second silicon composite (SC2) to an amount of the first silicon composite (SC1) is 2 to 5.

6. The negative electrode (20) as claimed in any one of claims 1 to 5,
wherein an amount of the first silicon composite (SC1) is 2 parts by weight to 7 parts by weight, based on 100 parts by weight of the negative electrode active material layer (AML2).

7. The negative electrode (20) as claimed in any one of claims 1 to 6,
wherein an amount of the second silicon composite (SC2) is 5 parts by weight to 15 parts by weight, based on 100 parts by weight of the negative electrode active material layer (AML2).

8. The negative electrode (20) as claimed in any one of claims 1 to 7,
wherein the first carbon material (C1) comprises a soft carbon, and
the second carbon material (C2) comprises an amorphous hard carbon.

9. The negative electrode (20) as claimed in any one of claims 1 to 8,
wherein an X-ray diffraction pattern of the negative electrode (20) comprises:
a fifth peak value that is a maximum peak intensity in a diffraction angle 2θ range of 20° to 21°; and
a sixth peak value that is a maximum peak intensity in a diffraction angle 2θ range of 23° to 24°.

10. The negative electrode (20) as claimed in any one of claims 1 to 9,
wherein each of the first carbon material (C1) and the second carbon material (C2) comprises a matrix structure,
wherein the amorphous silicon (S1) is dispersed in the matrix structure of the first carbon material (C1), and
wherein the crystalline silicon (S2) is dispersed in the matrix structure of the second carbon material (C2).

11. The negative electrode (20) as claimed in any one of claims 1 to 10,
wherein each of the amorphous silicon (S1) and the crystalline silicon (S2) is in a form of nanoparticle,
wherein an average particle diameter of the nanoparticle of the amorphous silicon (S1) is 1 nm to 10 nm, and
wherein an average particle diameter of the nanoparticle of the crystalline silicon (S2) is 60 nm to 100 nm; and/or
wherein the negative electrode active material layer (AML2) further comprises a binder, a conductive material, or a combination thereof.

12. A rechargeable lithium battery (100) comprising:
the negative electrode (20) according to any one of claims 1 to 11;
a positive electrode (10); and
a separator (30) between the negative electrode (20) and the positive electrode (10).
